# EUROPEAN PATENT SPECIFICATION

(11) **EP 3 868 542 B1**
(45) Date of publication and mention of the grant of the patent: **02.04.2025**
(21) Application number: 20157815.0
(22) Date of filing: 18.02.2020
(51) Int. Cl.: B29C 51/08, B29C 37/00, B29C 51/14, B29C 51/26, B29C 51/02, B29B 11/04, B29C 51/32, B29K 105/08, B29L 31/30

(54) **PROCESS FOR MANUFACTURING A THREE-DIMENSIONAL INLAY PART FOR AN INTERIOR TRIM PART OF A VEHICLE, THREE-DIMENSIONAL INLAY PART FOR AN INTERIOR TRIM PART OF A VEHICLE AND INTERIOR TRIM PART OF A VEHICLE**
VERFAHREN ZUR HERSTELLUNG EINES DREIDIMENSIONALEN EINLEGETEILS FÜR EIN INNENVERKLEIDUNGSTEIL EINES FAHRZEUGS, DREIDIMENSIONALES EINLEGETEIL FÜR EIN INNENVERKLEIDUNGSTEIL EINES FAHRZEUGS UND INNENVERKLEIDUNGSTEIL EINES FAHRZEUGS
PROCÉDÉ DE FABRICATION D'UNE PIÈCE D'INCRUSTATION TRIDIMENSIONNELLE POUR UNE PIÈCE DE GARNITURE INTÉRIEURE D'UN VÉHICULE, PIÈCE D'INCRUSTATION TRIDIMENSIONNELLE POUR UNE PIÈCE DE GARNITURE INTÉRIEURE D'UN VÉHICULE ET PIÈCE DE GARNITURE INTÉRIEURE D'UN VÉHICULE

(43) Date of publication of application: 25.08.2021
(73) Proprietor: Motherson Innovations Company Limited, London EC2N 2AX (GB)
(72) Inventor: Pignard, Pierre, 68320 Jebsheim (FR)
(74) Representative: Westphal, Mussgnug & Partner Patentanwälte mbB

(56) References cited:
- DE-A1- 102016 121 736
- US-A- 4 751 121
- US-A- 5 068 001
- US-A- 5 084 317

## Description

The present disclosure relates to a process for manufacturing a three-dimensional inlay part for an interior trim part of a vehicle. Moreover, the present disclosure is directed to a three-dimensional inlay part for a trim part of a vehicle and to an interior trim part comprising such an inlay part.

Inlay parts of vehicles comprise a surface having a certain appearance and haptics that play a decisive role in the design and the perceived quality of the passenger compartment. Door panels often comprise a so-called map pocket, door inserts or a medaillion which are provided for example with a fleece, textile or felt-like decorative inlay.

In some cases this decorative inlay is inserted manually, whereby this inlay is typically made of several two-dimensional fleece blanks, which can be laminated with a double-sided adhesive tape on the back. The manufacturing process can be time consuming because of the difficulty to arrange several 2D-blanks onto an interior trim part having a three-dimensional shape such that they match exactly with the shapes and contours of the final interior trim part. Further, it is difficult at the beginning of a project when final geometries are still not fixed, to estimate the needed cycle time. In term of quality, the manual arrangement operation of more glued blanks matching exactly together generates a higher amount of scrap because of the risk to obtain overlapped or distanced blanks.

Alternatively, this decorative inlay can also be a 3D fleecy part, wherein the necessary adhesive layer is added by spraying dispersion or hot-melt glue. This alterative is on the contrary easier to plan, the cycle time is easier to predict, but is associated with more process steps and a higher level of automation, and thus with high machinery investment as spraying devices are fairly expensive.

CN 2016/94988 A1 and CN 203 681658 A1 disclose vehicle parts that are fixed to other parts of the vehicle by means of an adhesive layer. Further examples of vehicle parts being fixed to other parts of the vehicle are disclosed in US 5 084 317 A, US 4 751 121 A, DE 10 2016 121 736 A1 and US 5 068 001 A.

It is one task of one embodiment of the present disclosure to present a process for manufacturing a three-dimensional inlay part for an interior trim part of a vehicle facilitating the assembly of the final interior trim part. Moreover, it is one task to present a process having a short predictable cycle time, while reducing investment costs, at the same time balancing the level of automation and the amount of investment, while keeping the amount of scraps small and increasing the repeatability and the quality of the process and of the final interior trim part.

Furthermore, an embodiment of the present disclosure has the objective to present a three-dimensional inlay part for an interior trim part of a vehicle that is obtained by such a process and an interior trim part comprising such a three-dimensional inlay part.

The task is solved by the features specified in claims 1. Advantageous embodiments are the subject of the dependent claims.

According to one embodiment of the present disclosure a process for manufacturing a three-dimensional inlay part for an interior trim part of a vehicle, comprises the steps of
- providing a thermo-formable main layer having a décor side and a rear side, wherein
   ∘ an adhesive layer is applied on the rear side, and
   ∘ a releasable foil is applied on the adhesive layer,
- inserting the thermo-formable main layer including the adhesive layer and the releasable foil into a forming unit,
- forming the thermo-formable main layer into a three-dimensional inlay part by applying pressure by means of the forming unit, and
- removing the three-dimensional inlay part from the forming unit.

Initially the thermo-formable main layer is usually a two-dimensional blank and thus flat and not curved. The adhesive layer and the releasable foil may be applied to the thermo-formable main layer by a supplier and thus well before it is formed by the forming unit. The releasable foil may also be considered as a removable foil.

When the three-dimensional inlay part is finished only the releasable foil has to be removed to connect the three-dimensional inlay part to a carrier, thereby forming a trim part of the vehicle. It is not necessary to spray a hot-melt glue or the like on the three-dimensional inlay part, thereby avoiding the risk of over-spraying which means that some areas are unintentionally provided with some of the hot melt glue. As no spraying operation is necessary the cost for the respective spraying devices can be avoided, thereby reducing the investment costs.

According to one alternative of the invention the thermo-formable main layer is made of a thermo-plastic material, wherein the process comprises the step of calibrating the thermo-formable main layer by means of a calibration unit before being inserted into the forming unit. Examples of a thermoplastic material are polypropylene (PP) and polyethylene-terephthalate (PET). In the calibration unit heat and pressure is applied to the thermo-formable main layer to reduce inner stress and air. Air may obstruct the heat transfer through the main layer. By removing the air the heat transfer through the main layer is homogenized and the heating of the main layer is accelerated. The calibration is conducted including the adhesive layer and the releasable foil.

According to one embodiment the step of forming the thermo-formable main layer into a three-dimensional inlay part comprises cooling of the thermo-formable main layer by means of the forming unit. As the main layer is heated during the calibration step it becomes soft enough to be formed into the three-dimensional inlay part. The cooling of the thermo-formable main layer upon forming facilitates the demolding thereby improving the dimensional accuracy of the inlay part.

In a further embodiment the thermo-formable main layer is made of a thermoplastic non-woven material. The non-woven material can be a fleece-material that offers a specific appearance and haptics. The non-woven material may comprise a mix of at least two kinds of fibers or elements with different melting temperatures or with elements that do not melt, such as flax fibers, The process temperature is chosen to melt one element or fiber while the other one keeps its characteristics to offer specific appearance and haptics. In particular when the three-dimensional inlay part is an interior inlay part the appearance and the haptics provided by the non-woven material increases the perceived quality of the passenger compartment of the vehicle.

In accordance with another embodiment the non-woven material may comprise bi-component fibers. Bi-component fibers have a core of a first thermoplastic material that is embedded into an outer layer of a second thermoplastic material. The first thermoplastic material has a melting point that is higher than the melding point of the second thermoplastic material. The temperature applied during the forming process is chosen between the two melting points. The outer layer is melting while the core of the bi-component fibers does not melt. A matrix of fibers glued to each other is created.

According to another alternative of the present invention
- the thermo-formable main layer is made of a thermoset material and
- the step of forming the thermo-formable main layer into a three-dimensional inlay part comprises heating of the thermo-formable main layer by means of the forming unit.

Examples of a thermoset material are polyester and polyurethane (PU) or acrylate. It is noted that in case the thermo-formable main layer is made of a thermoset material a calibration step must not be conducted. The main layer made of a thermoset material is flexible enough to be formed into a three-dimensional inlay part without applying heat. However, to fix the three-dimensional shape the main layer has to be cured, for which purpose the latter is heated up at least to its curing temperature in the forming unit.

In a further embodiment a décor layer is applied on the décor side. The décor layer can be adjusted to the remaining design of the passenger compartment in a flexible way.

It is important that the adhesive layer can particularly easily be designed such that the adhesive layer maintains its adhesive properties after the forming process when and in particular after heat and pressure is applied. Moreover, adhesive layers used in the processes described herein need to be designed such that the adhesive layer does not become liquefied and migrates into the thermo-formable main layer. These properties may be for example be reached in case the adhesive layer is acrylic-, polyurethane- or polyolefine-based.

In accordance with another embodiment the releasable foil is stretchable. As noted earlier the releasable foil is applied to the adhesive layer well before the thermo-formable main layer including the adhesive layer and the releasable foil is inserted into the forming unit. In particular when convexly shaped sections are created by the forming process the stretchable properties of the releasable foil avoids that areas of the adhesive layer become uncovered due to releasable film delamination or breaking or the like. In these areas the adhesive layer could stick to the forming unit which then needs to be cleaned to avoid structural inaccuracies of the inlay part subsequently produced. Further dust or impurities may stick to the not protected areas and disturb the adhesion on the substrate.

Beyond that the stretchable adhesive layer enables to follow the elongations and distortions generated during the molding process to avoid tear down or wrinkling.

In a further embodiment the releasable foil is made of polyester, for example polyethylene-terephthalate (PET), of polytetrafluorethylene (PTFE) or of a silicone-based material. These materials are particularly suitable to provide the stretchable properties also under the conditions that prevail during the forming process.

The material of the adhesive layer and the releasable foil should be chosen such that after the forming process the releasable foil can be removed from the adhesive layer without the need to apply high forces. Moreover, the releasable foil should not break during removal from the adhesive layer.

A realization of the present disclosure is directed to a three-dimensional inlay part for an interior trim part of a vehicle obtained by a process according to one of the embodiment previously presented. The technical effects and advantages as discussed with regard to the present process equally apply to the inlay part. In particular the mounting process of the respective trim part of the vehicle is facilitated as only the releasable foil needs to be removed before gluing the three-dimensional inlay part to a carrier or to another part of the vehicle. Inlay parts may be used for map pockets in which the inlay parts are fastened to a main carrier of the door panel.

Another example of the present disclosure is directed to an interior trim part of a vehicle, comprising
- a main carrier, and
- a three-dimensional inlay part that is glued to the main carrier by means of the adhesive layer.

The main carrier may be a part of the door panel to which the inlay part is fastened. As noted, the releasable foil only has to be removed and after that the inlay part can be connected to the main carrier. The production is simplified and cost efficient as on the assembly line and nearby, no further machinery or equipment is needed.

The present disclosure is described in detail with reference to the drawings attached wherein
- Figure 1: is a principle sketch showing the relevant steps of a process according to a first embodiment of the present disclosure for manufacturing a three-dimensional inlay part for an interior trim part of a vehicle,
- Figure 2: is a principle sketch showing the relevant steps of a process according to a second embodiment of the present disclosure for manufacturing a three-dimensional inlay part for an interior trim part of a vehicle,
- Figures 3A to 3C2: are principle sketches of different embodiments of a three-dimensional inlay part for an interior trim part of a vehicle, and
- Figures 4A to 4D: shows a side door of a vehicle in different mounting stages and different perspectives provided with a three-dimensional inlay part according to the present disclosure.

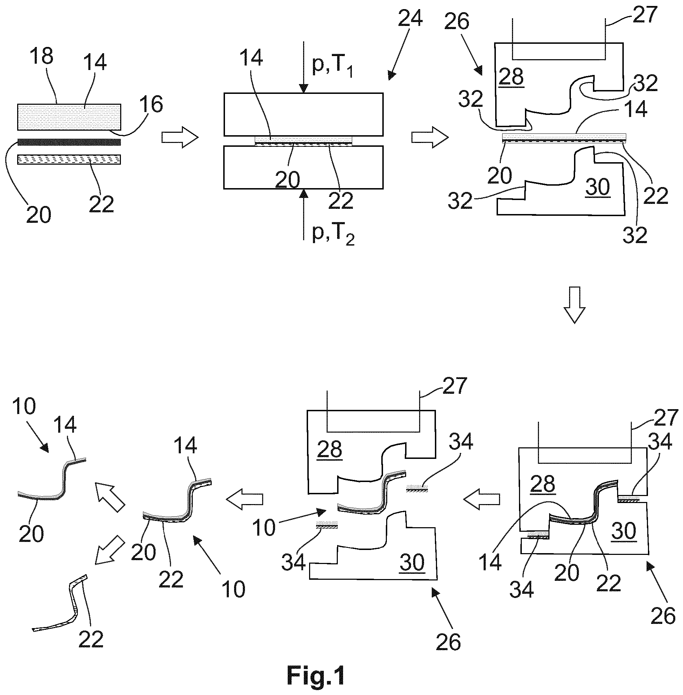

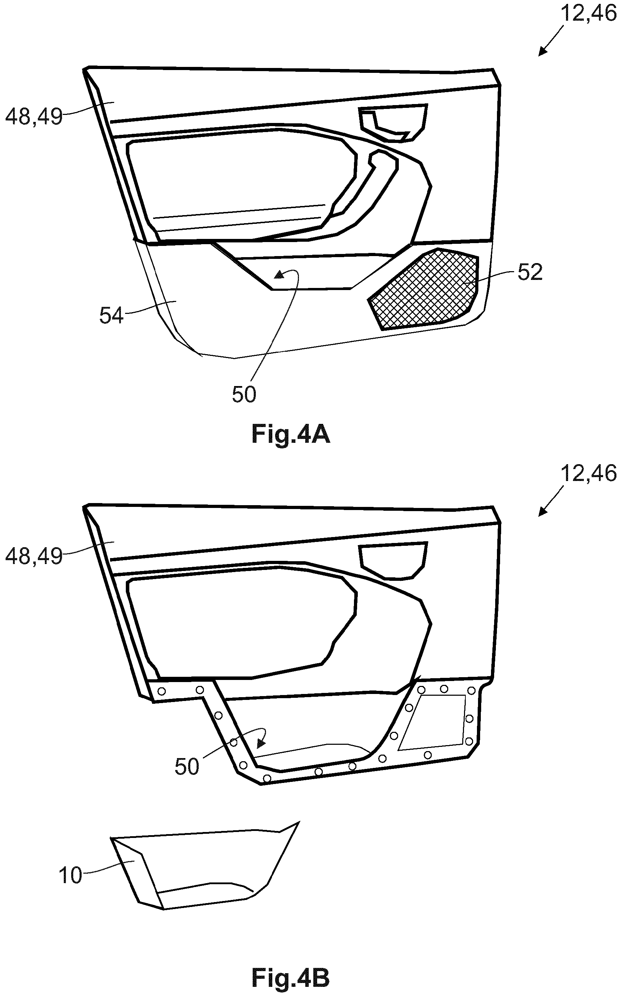

Figure 1 shows the relevant steps of a process according to a first embodiment for manufacturing a three-dimensional inlay part 10 of a vehicle 12 (see Figure 4B). In the first step a thermo-formable main layer 14 made of a thermoplastic material and having a décor side 18 and a rear side 16 is provided which is a two-dimensional blank and thus almost flat and not noticeably curved. It is assumed that in Figure 1 the décor side 18 is the upper side or upper surface and the rear side 16 is the lower side or lower surface of the main layer 14. An adhesive layer 20 is applied on the rear side 16 and a releasable foil 22 is applied to the adhesive layer 20. The respective steps may be conducted by a supplier and thus well before the subsequent steps.

In Figure 1 the adhesive layer 20 and the releasable foil 22 completely cover the rear side 16. It is, however, possible to only partially cover the décor side 18, for example in the edge regions.

After that the thermo-formable main layer 14 including the adhesive layer 20 and the releasable foil 22 is transferred to a calibration unit 24 in which pressure and heat are applied. As visible from Figure 1 a first temperature T₁ is applied on the décor side 18 and a second temperature T₂ is applied on the rear side 16. The first temperature T₁ and the second temperature T₂ differ from each other. Usually the first Temperature T₁ is lower than the second temperature T₂.

Internal stress and air are hereby removed to avoid that the air creates a resistance against the heat transfer inside the thermo-formable main layer 14. The thermo-formable main layer 14 including the adhesive layer 20 and the releasable foil 22 is then transferred into a forming unit 26 where the thermo-formable main layer 14 is formed into a three-dimensional inlay part 10.

As the thermo-formable main layer 14 is transferred immediately to the forming unit 26 the thermo-formable main layer 14 is still warm and soft enough to be formed into the three-dimensional inlay part 10 without damage. The forming unit 26 is equipped with a cooling element 27 to ensure the cooling of the three-dimensional inlay part to a temperature which allows the demolding without distortions.

As evident from Figure 1 the forming unit 26 comprises an upper tool 28 and a lower tool 30 that are movable relative to each other. The thermo-formable main layer 14 including the adhesive layer 20 and the releasable foil 22 is inserted into the forming unit 26 when the forming unit 26 is in the open position in which the upper tool 28 and the lower tool 30 are at distance to each other. After that the forming unit 26 is closed by moving the upper tool 28 and the lower tool 30 towards each other. Thereby a certain pressure is applied to the thermo-formable main layer 14 including the adhesive layer 20 and the releasable foil 22 such that they are formed into the desired three-dimensional shape.

The upper tool 28 and the lower tool 30 may comprise cutting edges 32 or similar features like knives or blades such that parts of the thermo-formable main layer 14 including the adhesive layer 20 and the releasable foil 22 are cut. Thereby the dimensional accuracy can be increased compared to a forming process without cutting and/or a separate cutting step can be avoided.

After the forming process the forming unit 26 is opened and the now finished three-dimensional inlay part 10 is removed from the forming unit 26. The cut parts 34, in particular edge parts or off-cuts are removed. The finished three-dimensional inlay part 10 may then be transported, stacked and stored until it is mounted to its foreseen counterparts of the trim part 58 of a vehicle 12. For that purpose the releasable foil 22 is removed from the adhesive layer 20. The three-dimensional inlay part 10 can be fastened to a main carrier 49 (see Figures 4A to 4D) or to another trim part 58 of a vehicle 12 via the adhesive layer 20.

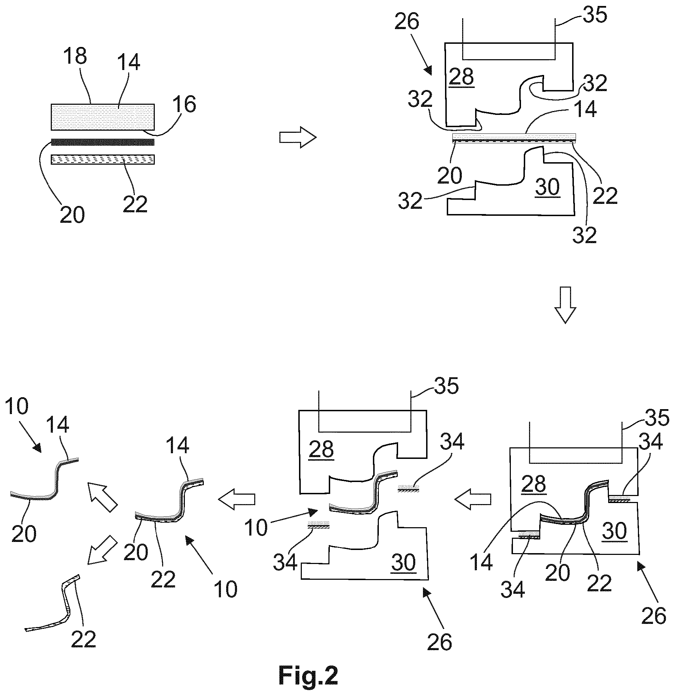

Figure 2 shows the relevant steps of a process according to a second embodiment for manufacturing a three-dimensional inlay part 10 of a vehicle 12 (see Figure 4B). In this case the thermo-formable main layer 14 is made of a thermoset material. Due to this difference no calibration step is conducted. To be able to form the thermo-formable main layer 14 into a three-dimensional inlay part 10 the forming unit 26 is equipped with a heating element 35. The remaining steps are the same as explained for the process shown in Figure 1.

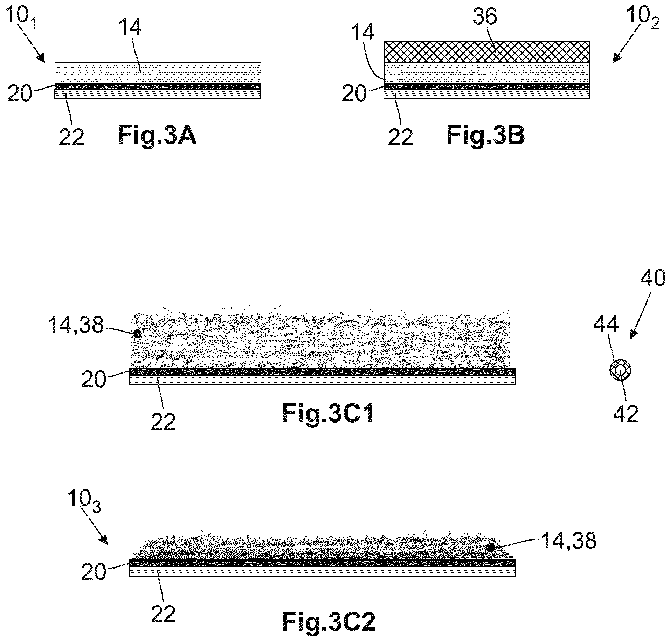

Figures 3A to 3C2 show different embodiments of the three-dimensional inlay part 10. For the sake of clarity the three-dimensional inlay part 10 is shown without any curvature.

In the first embodiment shown in Figure 3A the three-dimensional inlay part 10₁ consists of the thermo-formable main layer 14, the adhesive layer 20 applied to the thermo-formable main layer 14 and the releasable foil 22 applied to the adhesive layer 20. The thermo-formable main layer 14 is made of a thermoplastic or thermoset material. The thermo-formable main layer 14 is geometrically stable at room temperature such that it maintains its shape after removal from the forming unit 26.

The adhesive layer 20 may be acrylic-, polyurethane- or polyolefine-based. The releasable foil 22 may be made of thermoplastic polyester or of a silicone-based material. The releasable foil 22 and the adhesive layer 20 are provided with stretchable properties.

In the second embodiment of the three-dimensional inlay part 10₂ shown in Figure 3B a décor layer 36 is applied to the thermo-formable main layer 14. The remaining structure is the same as of the first embodiment of the three-dimensional inlay part 10₁. The décor layer 36 may be fastened to the thermo-formable main layer 14 by needle-punching, thermo-laminating or gluing.

In Figures 3C1 and 3C2 a third embodiment of the three-dimensional inlay part 10₃ is shown. Figure 3C1 shows thermo-formable main layer 14 comprising the adhesive layer 20 and the releasable foil 22 before the forming process and Figure 3C2 after the forming process. The thermo-formable main layer 14 is made of a thermo-plastic non-woven material 38 comprising thermoplastic fibers or elements, in this case a fleece material which may be made of polyethylenterephthalate (PET), for example PET-fibers or a mix of PET-fibers with different melting temperature.

Depending on the application the non-woven material 38 may also comprise some bi-component fibers 40 which comprise a first thermoplastic material 42, **e.g.,** PET in the core and an outer layer with a second thermoplastic material 44 having a lower melting point than the first thermoplastic material 42. The temperature in the calibration device and the forming unit 26 is set above the melting point of the second thermoplastic material 44 but below the melting point of the first thermoplastic material 42. Temperatures typically employed during the calibration and forming process are around 180° and 220°C for the rear side 16.

Figure 3C2 shows the finished three-dimensional inlay part 10₃ according to the third embodiment. Comparing Figure 3C1 and 3C2 the compression of the non-woven material 38 during the calibration and forming process becomes evident. Due to the melting of the second material 44 the fibers 40 are glued to each other, thereby forming a comparatively stable matrix.

Figures 4A to 4D show a side door 46 of a not further shown vehicle 12 in different mounting stages. Figure 4A shows the side door 46 in the fully mounted state. The side door 46 comprises a door panel 48 which also acts as a main carrier 49 to or in which an inlay part 10 as described before may be fastened.

In the fully mounted state, i.e., with the inlay part fastened to the main carrier 49, the door panel 48 constitutes an interior trim part 58 which forms a map pocket 50 together with a further trim part 54 which may also house parts of a loudspeaker grill 52. The map pocket 50 is the hollow space encompassed by the door panel 48 and the further trim part 54.

Other embodiments of an inlay part 10 are a door insert, a medaillion or an inlay for a dashboard.

Figure 4B shows the side door 46 partially dismantled. In particular the further trim part 54 is removed. Moreover a three-dimensional inlay part 10 is removed but separately shown in Figure 4B. In the shown embodiment the three-dimensional inlay part is made by the process as discussed above.

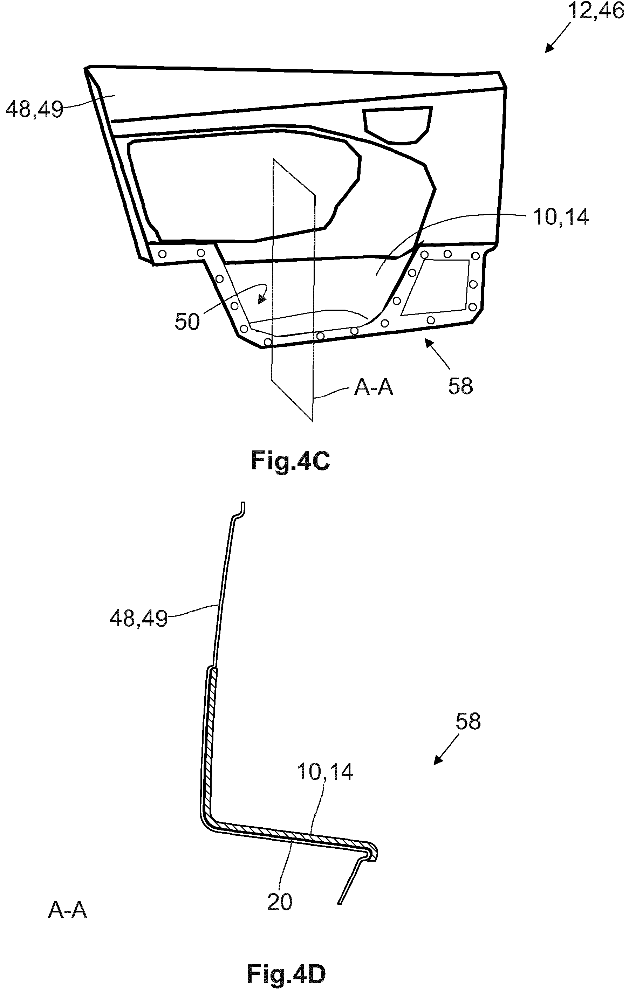

Figure 4D shows a sectional view along a section plane defined in Figure 4C. It is evident that the inlay part 10 is fastened to the main carrier 49 via the adhesive layer 20. Before the fastening process the releasable foil 22 has been removed.

As mentioned, the main carrier 49, in this case the door panel 48, and the three-dimensional inlay part 10 form an interior trim part 58 when the inlay part 10 is fastened to the main carrier 49.

### Reference list

- 10: three-dimensional inlay part
- 10₁ - 10₃: three-dimensional inlay part
- 12: vehicle
- 14: thermo-formable main layer
- 16: décor side
- 18: rear side
- 20: adhesive layer
- 22: releasable foil
- 24: calibration unit
- 26: forming unit
- 27: cooling element
- 28: upper tool
- 30: lower tool
- 32: cutting edge
- 34: cut part
- 35: heating element
- 36: décor layer
- 38: non-woven material
- 40: bi-component fiber
- 42: first thermoplastic material
- 44: second thermoplastic material
- 46: side door
- 48: door panel
- 49: main carrier
- 50: map pocket
- 52: loudspeaker grill
- 54: further trim part
- 58: interior trim part

## Claims

1. Process for manufacturing a three-dimensional inlay part (10) for an interior trim part (58) of a vehicle (12), comprising the steps of
- providing a thermo-formable main layer (14) having a décor side (18) and a rear side (16), wherein
∘ an adhesive layer (20) is applied on the rear side (16), and
∘ a releasable foil (22) is applied on the adhesive layer (20),
- inserting the thermo-formable main layer (14) including the adhesive layer (20) and the releasable foil (22) into a forming unit (26),
- forming the thermo-formable main layer (14) into a three-dimensional inlay part (10) by applying pressure by means of the forming unit (26), and
- removing the three-dimensional inlay part (10) from the forming unit (26),
**characterized in that**
- the thermo-formable main layer (14) is made of a thermoplastic material and the process comprises the step of calibrating the thermo-formable main layer (14) including the releasable foil (22) by means of a calibration unit (24) before being inserted into the forming unit (26) or
- the thermo-formable main layer (14) is made of a thermoset material and the step of forming the thermo-formable main layer (14) into a three-dimensional inlay part (10) comprises heating of the thermo-formable main layer (14) by means of the forming unit (26), wherein the releasable foil (22) is removed from the adhesive layer (20) after the forming process.

2. Process according to claim 1,
**characterized in that** the step of forming the thermo-formable main layer (14) into a three-dimensional inlay part (10) comprises cooling of the thermo-formable main layer (14) by means of the forming unit (26).

3. Process according to one of the claims 1 or 2,
**characterized in that** the thermo-formable main layer (14) is made of a thermoplastic non-woven material (38).

4. Process according to claim 3,
**characterized in that** the non-woven material (38) comprises bi-component fibers (40).

5. Process according to one of the preceding claims,
**characterized in that** a décor layer (36) is applied on the décor side (18).

6. Process according to one of the preceding claims,
**characterized in that** the adhesive layer (20) is acrylic-, polyurethane- or polyolefine-based.

7. Process according to one of the preceding claims,
**characterized in that** the releasable foil (22) and/or the adhesive layer (20) is/are stretchable.

8. Process according to claim 7,
**characterized in that** the releasable foil (22) is made of polyester of polytetrafluorethylene or of a silicone-based material.

## Patentansprüche

1. Verfahren zur Herstellung eines dreidimensionalen Einlegeteils (10) für ein Innenverkleidungsteil (58) eines Fahrzeugs (12), das die folgenden Schritte aufweist:
- Bereitstellen einer thermoformbaren Hauptschicht (14) mit einer Dekorseite (18) und einer Rückseite (16), wobei
o eine Klebeschicht (20) auf die Rückseite (16) aufgebracht wird und
o eine ablösbare Folie (22) auf die Klebstoffschicht (20) aufgebracht wird,
- Einführen der thermoformbaren Hauptschicht (14), die die Klebstoffschicht (20) und die ablösbare Folie (22) enthält, in eine Formungseinheit (26),
- Formen der thermoformbaren Hauptschicht (14) zu einem dreidimensionalen Einlegeteil (10) durch Anwenden von Druck mittels der Formungseinheit (26), und
- Entfernen des dreidimensionalen Einlegeteils (10) von der Formungseinheit (26),
**dadurch gekennzeichnet, dass**
- die thermoformbare Hauptschicht (14) aus einem thermoplastischen Material besteht und das Verfahren den Schritt des Kalibrierens der thermoformbaren Hauptschicht (14), die die ablösbare Folie (22) enthält, mittels einer Kalibriereinheit (24), bevor sie in die Formungseinheit (26) eingeführt wird, aufweist, oder
- die thermoformbare Hauptschicht (14) aus einem duroplastischen Material besteht und der Schritt des Formens der thermoformbaren Hauptschicht (14) zu einem dreidimensionalen Einlegeteil (10) ein Erwärmen der thermoformbaren Hauptschicht (14) durch die Formungseinheit (26) aufweist, wobei die ablösbare Folie (22) nach dem Formgebungsvorgang von der Klebeschicht (20) entfernt wird.

2. Verfahren nach Anspruch 1,
**dadurch gekennzeichnet, dass** der Schritt des Formens der thermoformbaren Hauptschicht (14) zu einem dreidimensionalen Einlegeteil (10) das Abkühlen der thermoformbaren Hauptschicht (14) durch die Formungseinheit (26) aufweist.

3. Verfahren nach einem der Ansprüche 1 oder 2,
**dadurch gekennzeichnet, dass** die thermoformbare Hauptschicht (14) aus einem thermoplastischen Vliesmaterial (38) besteht.

4. Verfahren nach Anspruch 3,
**dadurch gekennzeichnet, dass** das Vliesmaterial (38) Zweikomponentenfasern (40) aufweist.

5. Verfahren nach einem der vorhergehenden Ansprüche,
**dadurch gekennzeichnet, dass** auf der Dekorseite (18) eine Dekorschicht (36) aufgebracht wird.

6. Verfahren nach einem der vorhergehenden Ansprüche,
**dadurch gekennzeichnet, dass** die Klebeschicht (20) Acryl-, Polyurethan- oder Polyolefin-basiert ist.

7. Verfahren nach einem der vorhergehenden Ansprüche,
**dadurch gekennzeichnet, dass** die ablösbare Folie (22) und/oder die Klebeschicht (20) dehnbar ist/sind.

8. Verfahren nach Anspruch 7,
**dadurch gekennzeichnet, dass** die ablösbare Folie (22) aus Polyester, Polytetrafluorethylen oder einem Silikon-basierten Material besteht.

## Revendications

1. Procédé de fabrication d'un insert tridimensionnel (10) pour une pièce de garniture intérieure (58) d'un véhicule (12) comprenant les étapes consistant à :
- fournir une couche principale thermoformable (14) ayant un côté décor (18) et un dos (16),
* appliquer une couche adhésive (20) au dos (16), et
* appliquer un film amovible (22) sur la couche adhésive (20),
- insérer la couche principale thermoformable (14) comprenant la couche adhésive (20) et le film amovible (22) dans une unité de formage (26),
- former la couche principale thermoformable (14) en un insert tridimensionnel (10) en appliquant une pression avec l'unité de formage (26), et
- enlever l'insert tridimensionnel (10) de l'unité de formage (26), procédé **caractérisé en ce que**
- la couche principale thermoformable (14) est composée d'une matière thermoplastique et le procédé comprend l'étape de calibrage de la couche principale thermoformable (14) comprenant le film amovible (22) avec une unité de calibrage (24) avant de l'insérer dans l'unité de formage (26) ou
- la couche principale thermoformable (14) est faite de matière thermodurcissable et l'étape de formage de la couche principale thermoformable (14) en un insert tridimensionnel (10) consiste à chauffer la couche principale thermoformable (14) avec l'unité de formage (26), le film amovible (22) étant enlevé de la couche adhésive (20) après le procédé de formage.

2. Procédé selon la revendication 1,
**caractérisé en ce que**
l'étape de formage de la couche principale thermoformable (14) en un insert tridimensionnel (10) consiste à refroidir la couche principale thermo-formable (14) avec l'unité de formage (26).

3. Procédé selon l'une quelconque des revendications 1 ou 2,
**caractérisé en ce que**
la couche principale thermoformable (14) est faite de matière thermoplastique non tissée (38).

4. Procédé selon la revendication 3,
**caractérisé en ce que**
la matière non tissée (38) comprend des fibres bi-composantes (40).

5. Procédé selon l'une des revendications précédentes,
**caractérisé en ce qu'**
une couche de décor (36) est appliquée sur le côté décor (18).

6. Procédé selon l'une des revendications précédentes,
**caractérisé en ce que**
la couche adhésive (20) est à base acrylique, polyuréthane ou polyoléfine.

7. Procédé selon l'une des revendications précédentes,
**caractérisé en ce que**
le film amovible (22) et/ou la couche adhésive (20) est/sont extensibles.

8. Procédé selon la revendication 7,
**caractérisé en ce que**
le film amovible (22) est en polyester de polytétrafluoréthylène ou d'une matière à base de silicone.
